# EUROPEAN PATENT APPLICATION

(11) **EP 4 202 007 A1**
(43) Date of publication of application: **28.06.2023**
(21) Application number: 22847395.5
(22) Date of filing: 28.07.2022
(51) Int. Cl.: C09K 8/68, C09K 8/90, C07F 7/28

(54) **GUANIDINE GUM FRACTURING FLUID GEL CAPABLE OF REDUCING PH DEPENDENCE, GUANIDINE GUM FRACTURING FLUID SYSTEM AND PREPARATION METHOD THEREFOR AND APPLICATION THEREOF**

(30) Priority: 29.10.2021 CN 202111273894
(71) Applicant: China University of Petroleum, East China, Qingdaoshi, Shandong 266580 (CN)
(72) Inventor: WANG, Yanling, Shandong 266580 (CN); ZHANG, Chuanbao, Shandong 266580 (CN); LIANG, Lei, Shandong 266580 (CN); LIU, Bin, Shandong 266580 (CN); TANG, Longhao, Shandong 266580 (CN); GONG, Jincheng, Shandong 266580 (CN); XU, Ning, Shandong 266580 (CN)
(74) Representative: Bayramoglu et al.
(86) International application number: PCT/CN2022/108442
(87) International publication number: WO 2023/071333

(57) **Abstract**

The present invention relates to a guar gum fracturing fluid gel and a guar gum fracturing fluid system with reduced pH dependence, as well as a preparation method and an application thereof. The fracturing fluid gel includes 0.01-0.2% of nanomaterial, 0.1-0.5% of guar gum, 0.1-0.5% of organic boron-titanium crosslinker and a remaining amount of water. The fracturing fluid gel is more stable in network structure and good in temperature and shear resistance. The present invention further provides a preparation method and an application of the fracturing fluid gel. According to the guar gum fracturing fluid system, the dependence on pH is reduced, and the damage degree of the high pH value to a reservoir is alleviated.

## Description

### TECHNICAL FIELD

The present invention relates to a guar gum fracturing fluid gel and a guar gum fracturing fluid system with reduced pH dependence, as well as a preparation method and an application thereof, and belongs to the technical field of chemical additives for oil fields in the oil and gas field development.

### BACKGROUND

The development of a low-permeability reservoir is a difficulty in the oil and gas fields development in China. The fracturing technology can effectively improve the permeability of the reservoir, and increase oil and gas seepage channels, thereby raising the recovery ratio. The most basic components of hydraulic fracturing fluids include a thickener, a crosslinker, and a gel breaker, as well as some targeted additives (such as temperature stabilizer and germicide) added according to the fracturing requirements of different reservoirs. Guar gum and its derivatives are widely applied due to good water solubility and low cost but need to be combined with the crosslinker in order to reach the viscosity required for fracturing construction. The existing common crosslinkers include boron and transition metal crosslinkers. Transition metal crosslinkers can greatly improve the rheological properties of guar gum fracturing fluids, but cause heavy damage to the reservoir. The combination of boron crosslinkers and guar gum is frequently applied due to less damage to the reservoir but has the disadvantage of high requirements for the pH environment when in use.

Nanoparticles have been widely applied in the oil field development in recent years, and especially surface-modified functional nano-compounds have bright application prospects. For example, CN111139053A provides a nanosilica organic boron crosslinker and a preparation method thereof. The nanosilica organic boron crosslinker is nanosilica with an organic boronic acid group modified on its surface. The organic boronic acid group is combined with the nanosilica by means of covalent bonds through an amino group. The group modified on the surface of the nanosilica is at least one of a 2-aminobenzeneboronic acid group, a 3-aminobenzeneboronic acid group, and a 4-aminobenzeneboronic acid group. For another example, Chinese Patent Publication No. CN109971451A provides a graphene oxide nano-crosslinker for fracturing fluid and a preparation method thereof, and the performance of the organic boron crosslinker is greatly improved by grafting nanoparticles.

The performance of the crosslinker synthesized through surface grafting is much higher than that of ordinary organic boron crosslinkers. However, this synthesis method is cumbersome, and monomers may cause harm to human bodies during synthesis, which is detrimental to extensive use for fracturing construction.

### SUMMARY

In order to overcome shortcomings in the prior art, the present invention provides a fracturing fluid gel and a guar gum fracturing fluid system.

The present invention further provides a preparation method and an application of the fracturing fluid gel and guar gum fracturing fluid system.

A synthetic organic boron-titanium crosslinker is doped with nanoparticles containing hydroxyl groups on their surfaces under certain conditions, and a favorable effect is achieved in crosslinking of guar gum fracturing fluids. The synthesis process of the nano-crosslinked fracturing fluid is simplified, doses of the guar gum and the crosslinker are decreased, and the dependence on pH is reduced.

The terms will be described below:
The guar gum herein referred to includes guar gum raw powder or guar gum derivatives. For simplicity of description, they are collectively referred to as guar gum.

All ratios herein referred to are mass ratios.

The present invention adopts the following technical solution:
A fracturing fluid gel includes the following components in percentage by weight: 0.01-0.2% of nanomaterial, 0.1-0.5% of guar gum, 0.1-0.5% of organic boron-titanium crosslinker, and a remaining amount of water, wherein the pH value of the finished gel is 7-14.

The organic boron-titanium crosslinker is prepared by dissolving a boron compound in an ethylene glycol solution of 1-3 hydroxy C3 alcohol and alcohol amine to form a mixed solution, and then adding a titanate compound for a reaction.

According to the fracturing fluid gel and nano-guar gum fracturing fluid system, the dependence on pH is reduced, and the damage degree of the high pH values to a reservoir is alleviated. The pH value of the finished gel is preferably 7-11, and more preferably 8-9.5.

According to the present invention, preferably, a fracturing fluid gel includes the following components in percentage by weight: 0.05-0.15% of nanomaterial, 0.1-0.3% of guar gum, 0.2-0.5% of organic boron-titanium crosslinker and a remaining amount of water, wherein the pH value of the finished gel is 7-11.

Further preferably, a fracturing fluid gel includes the following components in percentage by weight: 0.06-0.12% of nanomaterial, 0.15-0.3% of guar gum, 0.12-0.5% of organic boron-titanium crosslinker and a remaining amount of water, wherein the pH value of the finished gel is 8-9.5.

According to the present invention, preferably, the nanomaterial is selected from nanocellulose, nanosilica, nano titanium oxide or graphene oxide.

These raw materials are all commercially available. The nanocellulose is rod-like particles with a diameter of 30-100 nm and a length of 200-500 nm. The nanosilica is particle with a size of 10-50 nm. The nano titanium oxide is particles with a size of 10-50 nm. The graphene oxide is a single-layer or multi-layer sheet-like structure with a micrometer-scale nanosheet length and a nanometer-scale thickness.

Further preferably, the nanomaterial contains an active hydroxyl group on its surface. The nanomaterial is commercially available or can be prepared through surface modification using existing technologies.

The guar gum is selected from one or more of guar gum raw powder, carboxymethyl guar gum, hydroxypropyl guar gum and carboxymethyl-hydroxypropyl guar gum.

A mass ratio of the 1-3 hydroxy C3 alcohol to the alcohol amine to the boron compound is 1:1.5-5:1-5. Further preferably, a mass ratio of the 1-3 hydroxy C3 alcohol to the alcohol amine to the boron compound to the ethylene glycol is 1:2-4:2-3.

A dose of the ethylene glycol is a dissolved amount. A mass ratio of the boron compound to the ethylene glycol is preferably 1-5:30-70, and more preferably 2-3:40-60.

The alcohol amine is monoethanolamine, diethanolamine or triethanolamine.

The 1-3 hydroxy C3 alcohol is selected from one or more of propanol, glycerol and isopropanol.

The boron compound is boronic acid, borax, polyethylene glycol borate or sorbitol boron.

The titanate compound is tetraisopropyl titanate or butyl titanate. The mass ratio of the titanate compound to the mixed solution is 1:10-30.

A fracturing fluid gel is prepared by dispersing the nanomaterial in an aqueous guar gum solution and crosslinking the solution with the organic boron-titanium crosslinker; a more detailed preparation method will be described below.

According to the present invention, a preparation method for the fracturing fluid gel includes the following steps:
(1) Preparing an organic boron-titanium crosslinker:
   a) Dissolving 1-3 hydroxy C3 alcohol and alcohol amine in ethylene glycol, uniformly mixing the solution, adding a boron compound proportionally, and stirring the solution continuously at a temperature of 40-80°C until boron is completely dissolved to obtain a mixed solution;
   b) Adding a titanate compound in the mixed solution proportionally, and increasing the temperature to 50-90°C for a reaction to obtain a stable organic boron-titanium crosslinker solution;
(2) Preparing a guar gum solution proportionally and completely swelling the guar gum solution, adding a nanomaterial, and uniformly mixing the solution until the nanomaterial is completely dispersed in the guar gum solution to obtain a well-swollen guar gum base solution;
(3) Uniformly mixing the guar gum base solution with the organic boron-titanium crosslinker, and performing crosslinking under the condition of the pH value of the finished gel to obtain a fracturing fluid gel.

According to the preparation method of the present invention, preferably, the reaction conditions include one or more of the following conditions:
a. In step a) of (1), the temperature is 55-70°C.
b. In step b) of (1), the mass ratio of the titanate compound to the mixed solution is 1:10-30.
c. In step b) of (1), the reaction temperature is 60-75°C.
d. In step b) of (1), the reaction time is 1-6 h, and further preferably 2-4 h.
e. In step (2), a solvent for adjusting the pH value is a sodium hydroxide solution with a mass fraction of 5-10%.
f. In step (2), the pH value is adjusted to 8-9.5.
g. In step (2), the nanomaterial is a solid powder or a suspension dispersed in a solvent. The solvent is a C1-3 low-carbon alcohol or ketone.

The temperature, as well as doses of the boron compound and titanate compound during synthesis, will affect the stability of the organic boron-titanium crosslinker. Using the preferred specific synthesis temperature and dose ratio of the present invention, the stable organic boron-titanium crosslinker solution can be obtained by the method of the present invention and will produce no precipitates when placed for a long time. The organic boron-titanium crosslinker is always a light yellow transparent liquid.

The present invention further provides an application of the fracturing fluid gel of the present invention in a guar gum fracturing fluid system.

The present invention further provides a guar gum fracturing fluid system, including the fracturing fluid gel of the present invention, a gel breaker and a cleanup additive.

The gel breaker is ammonium persulfate or potassium persulfate.

The cleanup additive is a fluorocarbon surfactant.

The guar gum fracturing fluid system may further include other conventional additives in the art.

The guar gum fracturing fluid system of the present invention is applied in fracturing construction to generate cracks in the formation and carry a proppant into the formation, thereby increasing the conductivity of the formation.

The present invention has the following technical features and favorable effects:
1. The nanomaterial added to the fracturing fluid gel of the present invention can enhance the thickening effect of guar gum. The nano-crosslinker formed by combining the organic boron-titanium crosslinker with nanoparticles has more crosslinking sites and a larger size, which improves the crosslinking performance. In addition, hydrogen bonds are formed between nanoparticles and guar gum, so that the stability of the network structure is enhanced through chemical bonding. This decreases doses of the organic boron-titanium crosslinker and guar gum, thereby reducing the cost and alleviating damage to a reservoir.
2. As complexants for synthesizing the organic boron-titanium crosslinker used in the fracturing fluid gel of the present invention, the 1-3 hydroxy C3 alcohol and ethanolamine provide the hydroxyl group, and involve an esterification reaction with subsequently added boron and titanium compounds. The method is simple and easy to operate, and all raw materials used are conventional commercially available products. The crosslinking effect of the organic boron-titanium crosslinker and the guar gum solution in the present invention is superior to that of only organic boron or organic titanium and guar gum, and in the presence of nanoparticles, the performance of the formed nano-crosslinked fracturing fluid is further improved to a great extent. The dose of guar gum used on a production site is generally 0.6-0.8 wt.% at present, while the dose of guar gum can be reduced to 0.1-0.2 wt.% in the fracturing fluid gel of the present invention, the fracturing fluid gel meets construction viscosity requirements, and its temperature resistance is above 130°C. If the dose of guar gum is about 0.3 wt.%, the fracturing fluid gel formed can be resistant to a temperature of above 150°C; if the dose of guar gum is 0.4-0.5 wt.%, the fracturing fluid gel formed can be resistant to a temperature of up to 170°C.
3. The guar gum fracturing fluid system prepared in the present invention contains nanoparticles, which play a role in supporting and connecting sites therein, improving the stability of the network structure of the fracturing fluid gel. Its temperature resistance, shear resistance, and fluid loss property are all superior to those in the prior art and can meet requirements for fracturing in oil and gas fields at 100-170°C. Different nanomaterials with various shapes and sizes form fracturing fluid gels with various properties, which can meet needs under different production conditions.
4. The dependence on pH is reduced for the fracturing fluid gel and nano-crosslinkedguar gum fracturing fluid system of the present invention, so that the pH value of the finished gel can be as low as 8-9.5, and the damage degree of the high pH value (>10) to a reservoir is alleviated. The organic boron-titanium crosslinker is hydrolyzed to generate polynuclear hydroxyl bridge complex ions of titanium, and they freely bond with cis-o-hydroxyl groups of guar gum to form a stable network structure. Under neutral and weakly alkaline conditions, with the increase of the pH value, the dissociation of Ti⁴⁺ in the organic boron-titanium crosslinker is accelerated, so that a favorable crosslinking effect can be achieved. The dissociation of Ti⁴⁺ is excessively fast when the pH value is higher than 11, resulting in dehydration of the formed gel. Therefore, the dependence on pH is reduced for the fracturing fluid gel of the present invention.

### BRIEF DESCRIPTION OF THE DRAWINGS

FIG. 1 is a viscosity-temperature curve of fracturing fluid gels in examples 1-3 sheared at 170 s⁻¹ and 130°C for 60 min. In the figure, the abscissa represents time (min), the left ordinate represents viscosity (mPa·s), and the right ordinate represents temperature (°C).
FIG. 2 is a viscosity-temperature curve of a fracturing fluid gel in example 4 sheared at 170 s⁻¹ and 170°C for 60 min. In the figure, the abscissa represents time (min), the left ordinate represents viscosity (mPa s), and the right ordinate represents temperature (°C).
FIG. 3 is a viscosity-temperature curve of fracturing fluid gels in comparative examples 1 and 2 sheared at 170 s⁻¹ and 130°C for 60 min. In the figure, the abscissa represents time (min), the left ordinate represents temperature (°C), and the right ordinate represents viscosity (mPa·s).

### DETAILED DESCRIPTION OF THE EMBODIMENTS

The present invention will be further described below in conjunction with specific embodiments, but the embodiments of the present invention are only illustrative and do not constitute a limitation to the present application under any circumstances. All raw materials described in the embodiments are conventional commercially-available products.

All nanomaterials used in the embodiments are rich in active hydroxyl groups on their surfaces. The active hydroxyl groups contained by the nanomaterials on their surfaces are generated during preparation, and the used nanoparticles containing active hydroxyl groups are purchased.

In the embodiments, unless otherwise specified, "%" is a percentage by weight, and all ratios are mass ratios.

### Example 1

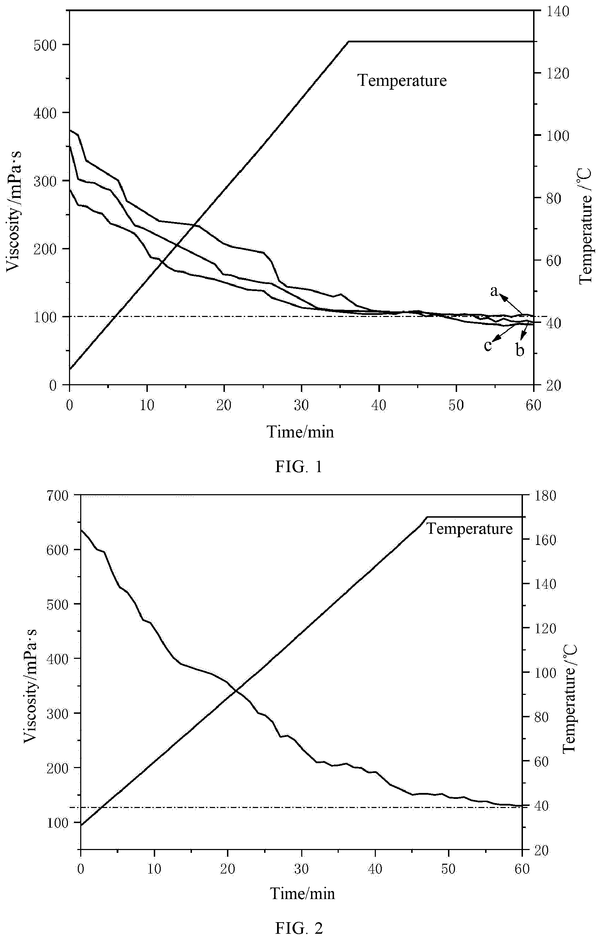

A preparation method of a guar gum fracturing fluid gel system included the following steps:
(1) Isopropanol and triethanolamine were dissolved in ethylene glycol at a mass ratio of 1:2 and then uniformly mixed, wherein a mass ratio of the ethylene glycol to the boronic acid was 20:1. Boronic acid was added at a mass ratio of 1:2 (isopropanol: boronic acid). The temperature was adjusted to 65°C. The solution was stirred continuously until the boronic acid was completely dissolved to form a mixed solution. Tetraisopropyl titanate was added to the mixed solution at a mass ratio of 1:20 (tetraisopropyl titanate: mixed solution). The temperature was increased to 75°C. A stable organic boron-titanium crosslinker solution was obtained through a continuous reaction for 3 h.
(2) A 0.3% hydroxypropyl guar gum solution was prepared and completely swollen, 0.1% of nanosilica containing active hydroxyl groups with an average particle size of 20 nm (Shanghai Naiou Nanotechnology Co., Ltd., 99.9%) was added, and the solution was uniformly mixed until nanoparticles were completely dispersed in the guar gum solution; the pH value of the solution was adjusted to 9 with a 10% sodium hydroxide solution, 0.5% of organic boron-titanium crosslinker was added, and the solution was stirred until it could be hung with a glass rod to obtain a fracturing fluid gel. The gel formed under these conditions had a good temperature and shear resistance. The viscosity-temperature curve is as shown in FIG. 1 (a). The residual viscosity of the gel was higher than 100 mPa s after the gel was sheared at 170 s⁻¹ and 130°C for 60 min.

### Example 2

A preparation method of a guar gum fracturing fluid gel system included the following steps:
Propanol and triethanolamine were dissolved in ethylene glycol at a ratio of 1:2 and then uniformly mixed, wherein a mass ratio of the ethylene glycol to the borax was 15:1. Borax was added at a ratio of 1:2 (propanol: borax). The temperature was adjusted to 65°C. The solution was stirred continuously until the borax was completely dissolved to form a mixed solution. Butyl titanate was added to the mixed solution at a mass ratio of 1:30 (butyl titanate: mixed solution). The temperature was increased to 75°C. A stable organic boron-titanium crosslinker solution was obtained through a continuous reaction for 3 h.

A 0.25% hydroxypropyl guar gum solution was prepared and completely swollen, 0.12% of nanotitania containing active hydroxyl groups with an average particle size of 25 nm (Aladdin Reagent (Shanghai) Co., Ltd., anatase, hydrophilic and lipophilic, 99.8%) was added, and the solution was uniformly mixed until nanoparticles were completely dispersed in the guar gum solution; the pH value of the solution was adjusted to 9 with a 10% sodium hydroxide solution, 0.5% of organic boron-titanium crosslinker was added, and the solution was stirred until it could be hung with a glass rod to obtain a fracturing fluid gel. The gel formed under these conditions had a good temperature and shear resistance. The viscosity-temperature curve is as shown in FIG. 1 (b). The residual viscosity of the gel was higher than 90 mPa·s after the gel was sheared at 170 s⁻¹ and 130°C for 60 min.

### Example 3

A preparation method of a guar gum fracturing fluid gel system includes the following steps:
Glycerol and triethanolamine were dissolved in ethylene glycol at a ratio of 1:3 and then uniformly mixed, wherein a mass ratio of the ethylene glycol to the boronic acid is 18:1. Boronic acid was added at a ratio of 1:2 (glycerol: boronic acid). The temperature was adjusted to 65°C. The solution was stirred continuously until the boronic acid was completely dissolved to form a mixed solution. Tetraisopropyl titanate was added to the mixed solution at a ratio of 1:30 (tetraisopropyl titanate: mixed solution). The temperature was increased to 75°C. A stable organic boron-titanium crosslinker solution was obtained through a continuous reaction for 3 h.

A 0.15% hydroxypropyl guar gum solution was prepared and completely swollen, 0.08% of nanocellulose with a diameter of 50 nm and a length of 400 nm (Jiangsu Beifang Shiji Cellulosic Material Co., Ltd.) was added, and the solution was uniformly mixed until nanoparticles were completely dispersed in the guar gum solution; the pH value of the solution was adjusted to 9 with a 10% sodium hydroxide solution, 0.5% of organic boron-titanium crosslinker was added, and the solution was stirred until it could be hung with a glass rod to obtain a fracturing fluid gel. The gel formed under these conditions had a good temperature and shear resistance. The viscosity-temperature curve is as shown in FIG. 1 (c). The residual viscosity of the gel was higher than 88 mPa s after the gel was sheared at 170 s⁻¹ and 130°C for 60 min.

### Example 4

A preparation method of a guar gum fracturing fluid gel system includes the following steps:
Glycerol and triethanolamine were dissolved in ethylene glycol at a mass ratio of 1:4 and then uniformly mixed, wherein a mass ratio of the ethylene glycol to the boronic acid is 20:1. Boronic acid was added at a ratio of 1:2 (glycerol: boronic acid). The temperature was adjusted to 65°C. The solution was stirred continuously until the boronic acid was completely dissolved to form a mixed solution. Tetraisopropyl titanate was added to the mixed solution at a ratio of 1:30 (tetraisopropyl titanate: mixed solution). The temperature was increased to 75°C. A stable organic boron-titanium crosslinker solution was obtained through a continuous reaction for 3 h.

A 0.5% hydroxypropyl guar gum solution was prepared and completely swollen, 0.06% of graphene oxide containing active hydroxyl groups (Shenzhen Tuling Jinhua Technology Co., Ltd.) was added, and the solution was uniformly mixed until nanoparticles were completely dispersed in the guar gum solution; the pH value of the solution was adjusted to 9 with a 10% sodium hydroxide solution; then, 0.5% of organic boron-titanium crosslinker was added, and the solution was stirred until it could be hung with a glass rod to obtain a fracturing fluid gel. The gel formed under these conditions has good temperature and shear resistance. The viscosity-temperature curve is as shown in FIG. 2. The residual viscosity of the gel was higher than 130 mPa·s after the gel was sheared at 170 s⁻¹ and 170°C for 60 min.

### Example 5.

The method is the same as that in Example 1 except that in step (2), the pH value of the solution was adjusted to 8. The residual viscosity of the obtained gel was higher than 92 mPa s after the gel was sheared at 170 s⁻¹ and 130°C for 60 min.

### Example 6.

The method is the same as that in Example 1 except that in step (2), the pH value of the solution was adjusted to 9.5. The residual viscosity of the obtained gel was higher than 95 mPa s after the gel was sheared at 170 s⁻¹ and 130°C for 60 min.

### Example 7.

The method is the same as that in Example 1 except that in step (2), 0.12% of organic boron-titanium crosslinker was added. The residual viscosity of the obtained gel was higher than 85 mPa s after the gel was sheared at 170 s⁻¹ and 130°C for 60 min.

### Example 8.

The method is the same as that in Example 4 except that in step (2), the pH value of the solution was adjusted to 11. The residual viscosity of the obtained gel was higher than 110 mPa·s after the gel was sheared at 170 s⁻¹ and 170°C for 60 min.

### Example 9.

The method is the same as that in example 1 except that the residual viscosity of the obtained gel was higher than 90 mPa·s after the gel was sheared at 170 s⁻¹ and 150°C for 60 min.

Comparative example 1: No nanoparticles were added.

Glycerol and triethanolamine were dissolved in ethylene glycol at a ratio of 1:4 and then uniformly mixed, wherein a mass ratio of the ethylene glycol to the boronic acid was 20:1. Boronic acid was added at a ratio of 1:2 (glycerol: boronic acid). The temperature was adjusted to 65°C. The solution was stirred continuously until the boronic acid was completely dissolved to obtain a mixed solution. Tetraisopropyl titanate was added to the mixed solution at a ratio of 1:30 (tetraisopropyl titanate: mixed solution). The temperature was increased to 75°C. A stable organic boron-titanium crosslinker solution was obtained through a continuous reaction for 3 h.

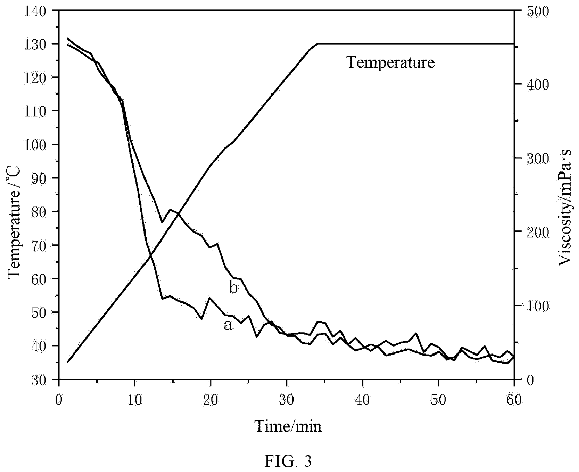

A 0.25% hydroxypropyl guar gum solution was prepared and completely swollen, 0.06% of graphene particles were added to a base solution, and the solution was uniformly mixed; the pH value of the solution was adjusted to 9 with a 10% sodium hydroxide solution; then, 0.5% of organic boron-titanium crosslinker was added, and the solution was stirred to a gel state with a glass rod. The gel formed under these conditions cannot be hung with a glass rod. The viscosity-temperature curve is as shown in FIG. 3 (a). The residual viscosity of the gel was lower than 40 mPa·s after the gel was sheared at 170 s⁻¹ and 130°C for 60 min.

Comparative example 2: The nanoparticles used were graphene particles.

Glycerol and triethanolamine were dissolved in ethylene glycol at a ratio of 1:4 and then uniformly mixed, wherein a mass ratio of the ethylene glycol to the boronic acid was 20:1. Boronic acid was added to the mixed solution at a ratio of 1:2 (glycerol: boronic acid). The temperature was adjusted to 65°C. The solution was stirred continuously until the boronic acid was completely dissolved to form a mixed solution. Tetraisopropyl titanate was added to the mixed solution at a ratio of 1:30 (tetraisopropyl titanate: mixed solution). The temperature was increased to 75°C. A stable organic boron-titanium crosslinker solution was obtained through a continuous reaction for 3 h.

A 0.25% hydroxypropyl guar gum solution was prepared and completely swollen, 0.06% of graphene particles containing no active hydroxyl groups were added to a base solution, and the solution was uniformly mixed until nanoparticles were completely dispersed in the guar gum solution; the pH value of the solution was adjusted to 9 with a 10% sodium hydroxide solution; then 0.5% of organic boron-titanium crosslinker was added, and the solution was stirred until it could be hung with a glass rod to obtain a fracturing fluid gel. The gel formed under these conditions had a good temperature and shear resistance. The viscosity-temperature curve is as shown in FIG. 3 (b). The residual viscosity of the gel was lower than 45 mPa·s after the gel was sheared at 170 s⁻¹ and 130°C for 60 min.

Comparative example 3: An organic boron crosslinker was used.

The method is the same as that in Example 1 except that in step (1), a crosslinker was prepared as follows: Isopropanol and triethanolamine were dissolved in 100 g of ethylene glycol at a ratio of 1:2 and then uniformly mixed. Borax was added to the mixed solution at a ratio of 1:20. The temperature was adjusted to 65°C. The solution was stirred continuously until the borax was completely dissolved. An organic boron crosslinker was obtained.

The residual viscosity of a fracturing fluid gel prepared by the method in step (2) of Example 1 using the organic boron crosslinker was lower than 42 mPa s after the gel was sheared at 170 s⁻¹ and 130°C for 60 min.

Comparative example 4: An organic boron-titanium crosslinker was prepared by another method.

The method is the same as that in Example 1 except that in step (1), a crosslinker was prepared by the following method:
25 g of ethylene glycol, 25 g of triethanolamine and 10 g of butyl titanate were added to a three-necked flask in turn and stirred magnetically. After the solution became clear from milky white, 3 g of sodium tetraborate was added. The pH value was adjusted to 4-5 with HCl. The temperature was controlled to slowly increase to 80°C. A reaction was conducted for 2 h to obtain a light yellow transparent liquid with a certain viscosity.

The residual viscosity of a fracturing fluid gel prepared by the method in step (2) of Example 1 using the organic boron crosslinker was lower than 50 mPa s after the gel was sheared at 170 s⁻¹ and 130°C for 60 min.

## Claims

1. A fracturing fluid gel, comprising the following components in percentage by weight: 0.01-0.2% of nanomaterial, 0.1-0.5% of guar gum, 0.1-0.5% of organic boron-titanium crosslinker and a remaining amount of water, wherein the pH value of the finished gel is 7-14.
The organic boron-titanium crosslinker is prepared by dissolving a boron compound in an ethylene glycol solution of 1-3 hydroxy C3 alcohol and alcohol amine to form a mixed solution, and then adding a titanate compound for a reaction.

2. The fracturing fluid gel of claim 1, comprising the following components in percentage by weight: 0.05-0.15% of nanomaterial, 0.1-0.3% of guar gum, 0.2-0.5% of organic boron-titanium crosslinker and a remaining amount of water, wherein the pH value of the finished gel is 7-11.

3. The fracturing fluid gel of claim 1 or 2, wherein the nanomaterial is selected from nanocellulose, nanosilica, nano titanium oxide or graphene oxide; preferably, the nanomaterial contains an active hydroxyl group on its surface.

4. The fracturing fluid gel of claim 1 or 2, wherein the guar gum is selected from one or more of guar gum raw powder, carboxymethyl guar gum, hydroxypropyl guar gum and carboxymethyl-hydroxypropyl guar gum.

5. The fracturing fluid gel of claim 1 or 2, wherein a mass ratio of the 1-3 hydroxy C3 alcohol to the alcohol amine to the boron compound is 1:1.5-5:1-5, and preferably 1:2-4:2-3.

6. The fracturing fluid gel of claim 1 or 2, wherein the alcohol amine is monoethanolamine, diethanolamine or triethanolamine; preferably, the 1-3 hydroxy C3 alcohol is selected from one or more of propanol, glycerol and isopropanol; preferably, the boron compound is boronic acid, borax, polyethylene glycol borate or sorbitol boron; the titanate compound is tetraisopropyl titanate or butyl titanate.

7. A preparation method of the fracturing fluid gel of any one of claims 1-6, comprising the following steps:
(1) preparing an organic boron-titanium crosslinker:
a) Dissolving 1-3 hydroxy C3 alcohol and alcohol amine in ethylene glycol, uniformly mixing the solution, adding a boron compound proportionally, and stirring the solution continuously at a temperature of 40-80°C until boron is completely dissolved to obtain a mixed solution.
b) Then adding a titanate compound into the mixed solution proportionally, and increasing the temperature to 50-90°C for a reaction to obtain a stable organic boron-titanium crosslinker solution.
(2) Preparing a guar gum solution proportionally and completely swelling the guar gum solution, adding a nanomaterial, and uniformly mixing the solution until the nanomaterial is completely dispersed in the guar gum solution to obtain a well-swollen guar gum base solution.
(3) Uniformly mixing the guar gum base solution with the organic boron-titanium crosslinker, and performing crosslinking under the condition of the pH value of the finished gel to obtain a fracturing fluid gel.

8. The preparation method of the fracturing fluid gel of claim 7, wherein the reaction conditions comprise one or more of the following conditions:
a. In step a) of (1), the temperature is 55-70°C;
b. In step b) of (1), a ratio of the titanate compound to the mixed solution is 1: 10-30;
c. In step b) of (1), the reaction temperature is 60-75°C;
d. In step b) of (1), the reaction time is 1-6 h, and further preferably 2-4 h;
e. In step (2), a solvent for adjusting the pH value is a sodium hydroxide solution with a mass fraction of 5-10%;
f. In step (2), the pH value is adjusted to 8-9.5;
g. In step (2), the nanomaterial is solid powder or suspension dispersed in a solvent; the solvent is C1-3 low-carbon alcohol or ketone.

9. An application of the fracturing fluid gel of claim 1 or 2 in a guar gum fracturing fluid system.

10. A guar gum fracturing fluid system, comprising the fracturing fluid gel of claims 1-6, a gel breaker and a cleanup additive; preferably, the gel breaker is ammonium persulfate or potassium persulfate; and the cleanup additive is a fluorocarbon surfactant.
